(19)

Europäisches
Patentamt
European
Patent Office
Office européen
des brevets

(11) **EP 4 538 916 A1**

(12) **EUROPEAN PATENT APPLICATION**

(43) Date of publication:
**16.04.2025 Bulletin 2025/16**

(21) Application number: **23306775.0**

(22) Date of filing: **12.10.2023**

(51) International Patent Classification (IPC):
**G06F 21/62** $^{(2013.01)}$

(52) Cooperative Patent Classification (CPC):
**G06F 21/6245; G06F 21/6254**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **CRAFT.AI**
**75006 Paris (FR)**

(72) Inventors:
- **PIERQUIN, Clément**
  **75006 PARIS (FR)**
- **BOUSSARD, Matthieu**
  **75006 PARIS (FR)**
- **PELLISSIER, François**
  **75006 PARIS (FR)**
- **BECHARAT, Chahram**
  **75006 PARIS (FR)**

(74) Representative: **Icosa**
**83 avenue Denfert-Rochereau**
**75014 Paris (FR)**

(54) **DEVICE FOR TRAINING A PRIVACY-PRESERVING GENERATIVE MODEL AND DEVICE FOR MANAGEMENT OF DATA PRIVACY**

(57)    The present invention relates to a device for training a privacy-preserving generative model (Ct) for management of data privacy configured to generate a synthetic time series, said synthetic time series being defined by a length, a sequence of timestamps and a sequence of data of structure type, each data of structure type comprising a n-tuple of features.

**FIG. 1**

EP 4 538 916 A1

**Description**

**FIELD OF INVENTION**

The present invention relates to the field of data privacy management.

More specifically, the present invention relates to a device for training a privacy-preserving generative model for management of data privacy configured to generate synthetic time series and to a device for management of data privacy configured to generate synthetic time series.

**BACKGROUND OF INVENTION**

Information and communication technology generate a growing amount of increasingly accurate data about people. Personalized data are valuable data that can turn out to be of huge interest for analysis or forecasting, for instance in the fields of storage management, fleet management, activity tracking, or autonomous vehicles. Personal data are however highly sensitive and their manipulation and dissemination should be carried out with caution.

The diffusion of a machine learning model dedicated to analysis or forecasts but trained with personal data could be confidentiality-breaking if diffused without care. Indeed, attacks such as reconstruction attacks can reconstruct original training data.

However, such analysis or forecasts are of huge interest. Therefore, there is a need for solutions enabling to obtain analysis or forecast results similar to those obtained from personal data while preserving data privacy.

The invention aims at providing such a solution.

**SUMMARY**

This invention thus relates to a device for training a privacy-preserving generative model for management of data privacy configured to generate a synthetic time series, the synthetic time series being defined by a length, a sequence of timestamps and a sequence of data of structure type, each data of structure type comprising a n-tuple of features, associated to one timestamp in the sequence of timestamps, the device comprising:

- at least one input interface configured to receive a training dataset comprising a set of private input time series, each among the set of private input time series comprising an input length value, a sequence of input timestamps, a sequence of input data of structure type, each input data comprising an n-tuple of features, associated to one input timestamp among the corresponding sequence of input timestamps,
- at least one processor configured to train an untrained generative model based on the training dataset and by using a privacy-preserving training technique, so as to obtain model parameters for the trained privacy-preserving generative model configured to output at least one synthetic time series,
- at least one output interface configured to output the model parameters associated to the trained privacy-preserving generative model,

wherein:

- the generative model comprises a combination of:

    - a first individual generative model configured to receive as input the input length values,
    - a second individual generative model configured to receive as input the input timestamps,
    - a third individual generative model configured to receive as input the input data of the structure type,
    - a first causal transformer block configured to receive as input a plurality of embedding vectors obtained from the first, second and third individual generative model,
    - a second causal transformer block to receive as input a conditioning vector associated to the generative model, and a plurality of compressed representations obtained from the first causal transformer block,

- the trained privacy-preserving generative model is configured to model relationships between the input length values, the input timestamps and the input data of the structure type.

Thus, the privacy preserving model described herein comprises in its architecture a combination of generative models and causal transformer blocks. As a consequence, the device for training the privacy preserving model advantageously leverages the characteristics of this architecture and can model relationships between the components of the input private time series of the set of input private time series. More specifically, during the training phase, the privacy preserving model approximately learns conditional probabilities between successive elements of the input time series. The use of the first causal transformer block and of the second causal transformer block in the architecture of the privacy preserving model is meant to integrate in this architecture an autoregressive behavior that will be leveraged in the training phase of the privacy preserving model.

In some embodiments, each among the first individual generative model and the second individual generative model comprises an instance of a base model, and the third individual generative model comprises a combination of n instances of the base model, wherein the base model is defined by a combination of an encoder, a decoder, a loss function, a sampler and a conditioning vector,
wherein:

- the encoder is configured to encode an input element into an embedding vector and a compressed representation,
- the decoder is configured to receive the conditioning vector and the compressed representation and to output a distribution representation,
- the sampler is configured to receive the conditioning vector and the distribution representation and to output an output element,
- the loss function is defined based on the distribution representation, the input element and the output element.

In some embodiments, the input timestamps are unevenly distributed.

In some embodiments, n is equal to 1 and the input n-tuples of features are single real numbers.

In some embodiments, the at least one processor is configured to train the untrained generative model using the privacy-preserving training technique by:

- encoding (S1), in a parallel manner, for a subset of private input time series among the set of private input time series, the corresponding input lengths by the encoder of the first individual generative model, the corresponding input timestamps by the encoder of the second individual generative model and the corresponding input data by the n encoders of the third individual generative model in a sequential manner, so as to obtain a corresponding subset of embedding vectors and a corresponding subset of compressed representations referred to as overall compressed representation,
- outputting (S2) a subset of distribution representations, in a parallel manner, using the decoders of the first, second and third individual generative model and based on the subset of embedding vectors and on a corresponding augmented subset of compressed representations, obtained from part of the overall compressed representation,
- minimizing (S3) an overall loss function based on the loss functions corresponding to respectively the first, the second and the third individual generative models by respectively modifying the first individual generative model, the second individual generative model and the third individual generative model, the first causal transformer block and the second causal transformer block,
- repeating steps (S1), (S2) and (S3) for another subset of private input time series among the set of private input time series until step (S1) has been applied to all private input time series of the set of private input time series.

In some embodiments, the at least one processor is configured to train the untrained generative model by carrying out step (S3) of minimizing the loss functions via a differentially private stochastic gradient descent algorithm.

The use of a differentially private stochastic gradient descent algorithm advantageously guarantees that the data comprised in the set of input private time series are kept confidential and secret during the training process.

In some embodiments, the augmented set of compressed representations is obtained based on the application of the first causal transformer block to the set of embedding vectors.

In some embodiments, the augmented set of compressed representations is further obtained based on the application of the second causal transformer block to the output of the application of the first causal transformer block to the set of embedding vectors.

Thus, the use of the first causal transformer block and of the second causal transformer block in the architecture of the privacy preserving model is meant to integrate in this architecture an autoregressive behavior and to favor, after the training phase, the prediction of synthetic time series presenting components, i.e., lengths, timestamps and data, with probability distributions similar to the probability distribution of the training dataset. More specifically, the privacy preserving model approximately learns conditional probabilities.

In some embodiments, the input data in the sequence of input data comprise one among storage management data, fleet management data, personal activity tracking data, autonomous vehicles data or medical records.

Another aspect of the invention pertains to a computer-implemented method for training a privacy-preserving generative model for generating a synthetic time series, the synthetic time series being defined by a length, a sequence of timestamps and a sequence of data of the structure type, each data of the structure type comprising a n-tuple of features and corresponding to one timestamp in the sequence of timestamps, comprising:

- receiving, by at least one input interface, a training dataset comprising a set of private input time series, each among the set of private input time series comprising an input length value, a sequence of input timestamps, a sequence of input data of the structure type, each input data comprising an input n-tuple of features and corresponding to one input timestamp among the corresponding sequence of input timestamps,
- training, by at least one processor, an untrained generative model based on the training dataset and by using a privacy-preserving training technique, so as to obtain model parameters for the trained privacy-preserving generative model configured to output at least one synthetic time series,
- outputting, via at least one output interface, the model parameters associated to the trained privacy-preserving generative model,

wherein:

- the privacy-preserving generative model comprises a combination of:

  - a first individual generative model configured to receive as input the input length values,
  - a second individual generative model configured to receive as input the input timestamps,
  - a third individual generative model configured to receive as input the input data of the structure type,
  - a first causal transformer block configured to receive as input a plurality of embedding vectors obtained from the first, second and third individual generative model,
  - a second causal transformer block to receive as input a conditioning vector associated to the generative model, and a plurality of compressed representations obtained from the first causal transformer block,

- the trained privacy-preserving generative model is configured to model relationships between the input length values, the input timestamps and the input data of the structure type.

Another aspect of the invention pertains to a device for management of data privacy configured to generate synthetic time series using a trained privacy-preserving generative model parametrized with model parameters obtained by a device for training a privacy-preserving generative model for management of data privacy configured to generate a synthetic time series as previously described, the synthetic time series being defined by a length, a sequence of timestamps and a sequence of data of structure type, each data of structure type comprising a n-tuple of features, associated to one timestamp in the sequence of timestamps, the device comprising:

- at least one input interface configured to receive the model parameters,
- at least one processor configured to:

  - generate the synthetic time series using the trained privacy-preserving generative model parametrized with the model parameters,

- at least one output interface configured to output the synthetic time series.

In some embodiments, the at least one processor is configured to sample the synthetic temporal series in an autoregressive manner.

In addition, the disclosure relates to a computer program comprising software code adapted to perform a method for management of data privacy or a method for training compliant with any of the above execution modes when the program is executed by a processor.

The present disclosure further pertains to a non-transitory program storage device, readable by a computer, tangibly embodying a program of instructions executable by the computer to perform a method for management of data privacy or a method for training, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

## DEFINITIONS

In the present invention, the following terms have the following meanings:
The terms **"adapted"** and **"configured"** are used in the present disclosure as broadly encompassing initial configuration, later adaptation or complementation of the present device, or any combination thereof alike, whether effected through material or software means (including firmware).

The term "**processor**" should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

"**Machine learning** (**ML**)" designates in a traditional way computer algorithms improving automatically through experience, on the ground of training data enabling to adjust parameters of computer models through gap reductions between expected outputs extracted from the training data and evaluated outputs computed by the computer models.

"**Datasets**" are collections of data used to build an ML mathematical model, so as to make data-driven predictions or decisions. In "**supervised learning**" (i.e. inferring functions from known input-output examples in the form of labelled training data), three types of ML datasets (also designated as ML sets) are typically dedicated to three respective kinds of tasks: "**training**", i.e. fitting the parameters, "**validation**", i.e. tuning ML hyperparameters (which are parameters used to control the learning process), and "**testing**", i.e. checking independently of a training dataset exploited for building a mathematical model that the latter model provides satisfying results.

A "**neural network** (**NN**)" designates a category of ML comprising nodes (called "**neurons**"), and connections between neurons modeled by "**weights**". For each neuron, an output is given in function of an input or a set of inputs by an "**activation function**". Neurons are generally organized into multiple "**layers**", so that neurons of one layer connect only to neurons of the immediately preceding and immediately following layers.

The above ML definitions are compliant with their usual meaning, and can be completed with numerous associated features and properties, and definitions of related numerical objects, well known to a person skilled in the ML field. Additional terms will be defined, specified or commented wherever useful throughout the following description.

## BRIEF DESCRIPTION OF THE DRAWINGS

**Figure 1** is a block diagram representing schematically a particular mode of a device for training a privacy-preserving generative model for management of data privacy configured to generate a synthetic time series, compliant with the present disclosure.

**Figure 2** is a block diagram representing an example of a device for management of data privacy configured to generate synthetic time series according to embodiments of the invention.

**Figure 3** is an example of a flowchart representing the main steps of an iteration of a training algorithm compliant with the present disclosure.

**Figure 4** is a flow chart showing successive steps executed with the device for training a privacy-preserving generative model for management of data privacy configured to generate a synthetic time series of Figure 1.

**Figure 5** is a flow chart showing successive steps executed with the device for management of data privacy configured to generate synthetic time series of Figure 2.

## DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

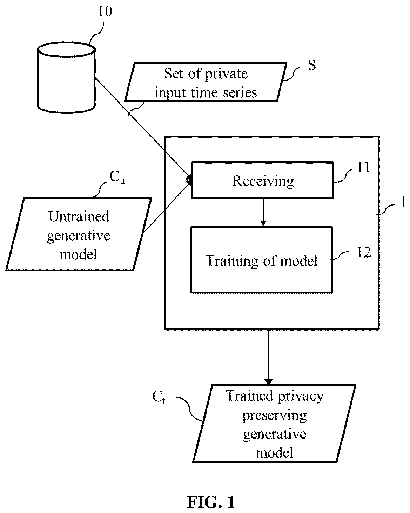

The present disclosure will be described in reference to a particular functional embodiment of a device 1 for training a privacy-preserving generative model for management of data privacy, the privacy-preserving generative model being configured to generate at least one synthetic time series, as illustrated on Figure 1.

The at least one synthetic time series can be for instance statistically similar to real time series comprising personal data, such as data relating to the fields of storage management, fleet management, activity tracking, or autonomous vehicles, medical records, for instance. Thus, an analysis or a forecast based on those synthetic time series would produce results comparable to those obtained with real personal data and thus could be leveraged in the same manner, without impeding any personal data privacy.

One synthetic time series among the at least one synthetic time series is defined by a length m (m being an integer number), a sequence of m-1 timestamps and a sequence of m data of structure type. Each data of structure type comprises a n-tuple of features, n being an integer number. Examples of features can be a binary number indicating the presence or the absence of an event, an integer number corresponding to a quantity of items, a categorical value corresponding to a qualitative attribute, among others.

Advantageously, the m-1 timestamps are unevenly distributed. In other words, the synthetic time series may be an irregular time series.

The device 1 is adapted to produce model parameters configured to parameterize a trained generative model, that in the present disclosure is called trained privacy-preserving generative model Ct, which is configured to receive as an input, the model parameters and generate as output synthetic time series. Notably, the device 1 is configured to train a generative (learning) model using a training dataset in order to obtain the trained privacy-preserving generative model Ct.

The input data for the device 1 may be the training dataset and the untrained architecture of the privacy-preserving generative model Cu.

In the present disclosure, the training dataset comprises a set of private input time series S.

By "private", it is meant time series comprising data that are considered personal, sensitive, or confidential in nature and are intended to be kept private and secure. Private data typically includes details that can directly or indirectly identify an individual. Each private input time series $Sp_k$ comprises an input length value $m_k$, a sequence of $m_k-1$ input timestamps $t_1, t_2, ... t_{mk-1}$, and a sequence of $m_k$ input data of structure type. Indeed, the private input time series $Sp_k$ in the set S do not necessarily have the same input length value. Each input data comprises an n-tuple of features and corresponds to one input timestamp among the corresponding sequence of input timestamps. The nature of the input data of all private input time series in the set S of private input time series $Sp_k$ is the same as the nature of the data of structure type of the synthetic time series Ss. By private input time series, it is meant a time series where the input data are real personal data, i.e., private data. For instance, the set S of private input time series $Sp_k$ contains at least 1000 private input time series.

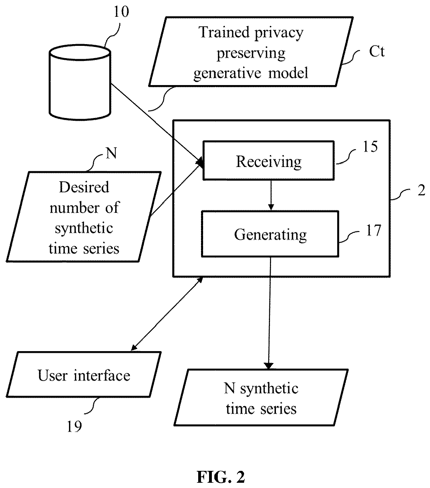

The device 1 for training a privacy-preserving generative model for management of data privacy configured to generate synthetic time series is associated with a device 2, represented on Figure 2, for management of data privacy configured to generate synthetic time series using the trained privacy-preserving generative model Ct parametrized with the model parameters obtained from the device 1, which will be subsequently described.

Though the presently described devices 1 and 2 are versatile and provided with several functions that can be carried out alternatively or in any cumulative way, other implementations within the scope of the present disclosure include devices having only parts of the present functionalities.

Each one of the devices 1 and 2 is advantageously an apparatus, or a physical part of an apparatus, designed, configured and/or adapted for performing the mentioned functions and produce the mentioned effects or results. In alternative implementations, any of the device 1 and the device 2 is embodied as a set of apparatus or physical parts of apparatus, whether grouped in a same machine or in different, possibly remote, machines. The device 1 and/or the device 2 may e.g. have functions distributed over a cloud infrastructure and be available to users as a cloud-based service, or have remote functions accessible through an API.

The device 1 for training and the device 2 for management of data privacy configured to generate synthetic time series may be integrated in a same apparatus or set of apparatus, and intended to same users. In other implementations, the structure of the device 2 may be completely independent of the structure of the device 1, and may be provided for other users. For example, the device 2 may have a parameterized generative model available to operators for synthetic time series generation, wholly set from previous training effected upstream by other players with the device 1.

In what follows, the modules are to be understood as functional entities rather than material, physically distinct, components. They can consequently be embodied either as grouped together in a same tangible and concrete component, or distributed into several such components. Also, each of these modules are possibly themselves shared between at least two physical components. In addition, the modules are implemented in hardware, software, firmware, or any mixed form thereof as well. They are preferably embodied within at least one processor of the device 1 or of the device 2.

The device 1 comprises a module 11 for receiving the training dataset comprising the set S of private input time series $Sp_k$ and the untrained privacy-preserving generative model Cu. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk).

The device 1 may further comprise a module 12 configured for training the untrained privacy-preserving generative model Cu based on the set S of private input time series $Sp_k$ and by using a privacy-preserving training technique, so as to obtain parameters referred to as model parameters as well as the trained privacy-preserving generative model Ct. By generative model, it is meant a model that is designed to generate new data similar to the data this model was trained on. Such model captures and learns the underlying patterns, structure, and distribution of the training data, allowing to generate new samples that exhibit similar characteristics. After the training phase, the trained privacy-preserving generative model Ct will be parameterized with the model parameters.

The trained privacy-preserving generative model Ct is configured to model, for each private input time series $Sp_k$, relationships between the corresponding input length value $m_k$, the corresponding input timestamps and the $m_k$ corresponding input data of the structure type. Advantageously, the trained privacy-preserving generative model Ct approximately learns conditional probabilities distributions between the input length values, input timestamps and the input data of the private input times series $Sp_k$ of the set S.

The untrained privacy-preserving generative model Cu comprises a combination of:

- a first individual generative model Clen, configured to receive as input the input length values $m_k$ in an individual manner,

  - a second individual generative model Ctime, configured to receive as input the input timestamps of each private input time series $Sp_k$ in an individual manner,

- a third individual generative model Cdata configured to receive as input the input data of the structure type of each private input time series $Sp_k$ in an individual manner,
- a first causal transformer block $H^E$ configured to receive as input a plurality of embedding vectors obtained from the first, second and third individual generative models Clen, Ctime and Cdata,

  - a second causal transformer block $H^D$ to receive as input a conditioning vector associated to the privacy-preserving generative model, and a plurality of compressed representations obtained from the first causal transformer block $H^E$.

By individual manner, it is meant that each input length value, each input timestamp or each input data of the structure type is received one at a time by respectively the first individual generative model Clen, the second individual generative model Ctime and the third individual generative model Cdata.

By causal transformer block, it is meant a Transformer architecture that incorporates causal or autoregressive behavior in its design and that generates outputs sequentially, one token at a time, based on previously generated tokens.

The first individual generative model Clen, the second individual generative model Ctime and the third individual generative model Cdata are based on a base model A. The base model A comprises components, that will be described below, meant to model together a generative model. The characteristics of each component of the base model A will determine the characteristics of the generative model. Given a specific set of training data, the base model A and its components can be fit so as to be able to generate data of same probability distribution as the specific set of training data.

More specifically, the base model A, that can be represented by a 5-uplet $(E, D, S, L, c_0)$, is defined by the combination of an encoder E, a decoder D, a loss function L, a sampler S and a conditioning vector $c_0$. The encoder E is configured to encode an input element into an embedding element and a compressed representation. The decoder D is configured to receive the conditioning vector $c_0$ and the compressed representation and to output a distribution representation. By distribution representation, it is meant a representation of the probability distribution over all possible outcomes when the decoder D receives the conditioning vector $c_0$ and the compressed representation and is run. By conditioning vector $c_0$, it is meant a vector of variables or events that are known or given, which conditions the probability distribution on those variables. The sampler S is configured to receive the conditioning vector $c_0$ and the distribution representation and to output an output element.

The first individual generative model Clen is composed of a first instance ($E_{len}$, $D_{len}$, $Sl_{en}$, $L_{len}$, $c_{0len}$) of the base model A. The encoder $E_{len}$ receives, as input data, length values in an individual manner.

The second individual generative model Ctime is composed of a second instance ($E_{time}$, $D_{time}$, $S_{time}$, $L_{time}$, $c_{0time}$) of the base model A. The encoder $E_{time}$ receives, as input data, timestamps in an individual manner.

The third individual generative model Cdata is composed of a combination of n instances (Cdata1, Cdata2, ..., Cdatan) of the base model A, with a first causal transformer block referred to as first data causal transformer $H^E_{data}$ implementing a function f and a second causal transformer block referred to as second data causal transformer $H^D_{data}$. Each instance Cdataj, for j comprised between 1 and n, is composed of a 5-uplet ($E_j$, $D_j$, $S_j$, $L_j$, $c_{0j}$). Each corresponding encoder $E_j$ receives as input data the corresponding $j^{th}$ feature of the input data of the structure type of each private input time series Spk in an individual manner. The ensemble of encoders $E_1$, ..., $E_n$ combined with the first data causal transformer $H^E_{data}$ is referred to as data encoder $E_{data}$. The ensemble of decoders $D_1$, ..., $D_n$ combined with the second data causal transformer $H^D_{data}$ is referred to as data decoder $D_{data}$. The ensemble of samplers $S_1$, ..., $S_n$ is referred to as data sampler $S_{data}$.

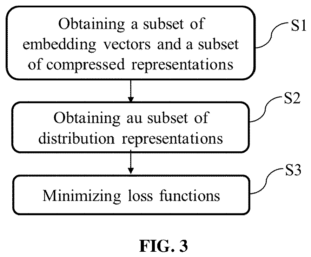

The training algorithm that the module 12 of the device 1 implements, when in function, to train the untrained privacy-preserving generative model Cu will be now described and is illustrated on Figure 3.

The set S of private input time series $Sp_k$ is divided into a plurality of subsets Sbp of private input time series, i.e., into batches. Each subset Sbp, and the corresponding private input time series comprised in the subset Sbp will be presented to the training algorithm in a single iteration. The corresponding private input time series comprised in the subset Sbp will be processed during the iteration in a parallel manner. Hence, the plurality of subsets will undergo the training algorithm in a sequential manner in a plurality of iterations, each one among the plurality of subsets being processed in a single iteration.

One iteration of the training algorithm is carried out for one particular input private series Si in a given subset Sbp as follows, and an example of flowchart of this iteration is illustrated on Figure 2. The same process is applied to all other input private series in the given subset Sbp in a parallel manner during the iteration.

The particular input private time series Si can be written as Si = ($m$, $t_1$, ... $t_{m-1}$, $X_1$, ..., $X_m$). m represents the length of the input private time series Si and is an integer number. $X_1$, ... $X_m$ are an input data of the structure type that can be represented by n-tuples of features. $X_1$ is an observation observed at a time stamp $T_1$ equal to 0. For all j comprised between 1 and m, $X_j$ is an observation observed at the timestamp $T_j = \sum_{k=1}^{j-1} t_k$.

The ensemble formed by the encoder Elen, the encoder Etime and the data encoder $E_{data}$ is referred to as composite encoder Eu. In a step S1, the composite encoder Eu encodes the private input time series Si, by first encoding the length m of the private input time series Si into an embedding vector $e_{len}$ and a compressed representation $h_{len}$, and then encoding the input data and the timestamps sequentially:

$$(e_{len}, h_{len}) = E_{len}(m)$$

$$(e_k^X, h_k^X) = E_{data}(X_k)$$

$$(e_k^t, h_k^t) = E_{time}(t_k)$$

where $e_k^X$ and $h_k^X$ represent respectively an embedding vector and a compressed representation of the input data $X_k$ and $e_k^t$ and $h_k^t$ represent respectively an embedding vector and a compressed representation of the timestamp $t_k$.

The first causal transformer block $H^E$ is applied to the embedding vectors, so as to obtain intermediate compressed representations.

$$\left(h_{len}^E, h_1^{E,X}, h_1^{E,t} ..., h_{m-1}^{E,X}, h_m^{E,t}, h_m^{E,X}\right) = H^E(e_{len}, e_1^t, e_1^X, ..., e_{m-1}^X, e_m^t, e_m^X)$$

An overall embedding vector of the private input time series Si is defined by $e = h_m^{E,X}$.

A compressed representation referred to as overall compressed representation h is then obtained, defined by:

$$h = \left( \left( h_{len}^E, h_1^{E,X}, h_1^{E,t} \ldots, h_{m-1}^{E,X}, h_m^{E,t}, h_m^{E,t} \right), \left( h_{len}, h_1^x, h_1^t \ldots, h_{m-1}^X, h_{m-1}^t, h_m^X \right) \right).$$

The ensemble formed by the decoder $D_{len}$, the decoder $D_{time}$ and the data decoder $D_{data}$ is referred to as composite decoder Du. In a step S2, the composite decoder Du processes a conditioning vector c and part of the overall compressed representation h to return a vector of distribution representations d in the following manner. The conditioning vector c is associated with the privacy-preserving generative model and is a random vector. For instance, the conditioning vector is sampled from a normal distribution.

The second causal transformer block $H^D$ is applied, so as to obtain a subset of so-called augmented compressed representations:

$$\left( h_{len}^D, h_1^{D,X}, h_1^{D,t} \ldots, h_{m-1}^{D,X}, h_m^{D,t}, h_m^{D,X} \right) = H^D \left( c, h_1^E, h_1^{E,X}, h_1^{E,t} \ldots, h_{m-1}^{E,X}, h_m^{E,t} \right)$$

The decoder $D_{len}$, the decoder $D_{time}$ and the data decoder $D_{data}$ are used to obtain a distribution representation for the length m of the private input time series Si:

$$d_{len} = D_{len} \left( h_{len}^D, h_{len} \right)$$

and for each input data and timestamp:

$$d_k^X = D_{data} \left( h_k^{D,X}, h_k^X \right)$$

$$d_k^t = D_{time} \left( h_k^{D,t}, h_k^t \right)$$

More precisely, for each value of k, the quantity $h_k^{D,X}$, comprising n components $\left( \left( h_k^{D,X} \right)_1, \left( h_k^{D,X} \right)_2, \ldots \left( h_k^{D,X} \right)_n \right)$ is used in the following manner. As mentioned before, the third individual generative model Cdata comprises the first data causal transformer block $H^E_{data}$ implementing a function f and the second causal transformer block referred to as second data causal transformer $H^D_{data}$. The corresponding quantities obtained with the second data causal transformer $H^D_{data}$ are as follows:

$$\left( \left( h_k^{D,X} \right)_1^D, \left( h_k^{D,X} \right)_2^D, \ldots, \left( h_k^{D,X} \right)_n^D \right) = H^D_{data} \left( h_k^{D,X}, \left( h_k^{E,X} \right)_1, \left( h_k^{E,X} \right)_2, \ldots, \left( h_k^{E,X} \right)_{n-1} \right)$$

where $\left( \left( h_k^{E,X} \right)_1, \left( h_k^{E,X} \right)_2, \ldots, \left( h_k^{E,X} \right)_{n-1} \right)$ are the compressed representations obtained by the data encoder $E_{data}$ of the third individual generative model Cdata.

The vector of distribution representations d is then defined as:

$$d = \left( d_{len}, d_1^X, d_1^t, \ldots, d_{m-1}^X, d_m^X \right)$$

In a step S3, an overall loss function Lu, based on the loss functions $L_{len}$, $L_{time}$, and $L_{data}$, corresponding respectively to the first individual generative model Clen, the second individual generative model Ctime and the third individual generative model Cdata, is minimized by implementing a differentially private stochastic gradient descent algorithm (DP-SGD). For instance, the overall loss function Lu may be defined by:

$$L_u = \frac{1}{3}\left[ L_{len} + \frac{1}{m-1}\sum_k L_{time}(d_k^t) + \frac{1}{m}\sum_k L_{data}(d_k^X) \right]$$

Hence, advantageously, the privacy of the private input time series is preserved. If the encoder Elen, the decoder Dlen, the encoder Etime, the decoder Dtime, the encoders $E_k$ for k comprised between 1 and n, the decoders $D_k$ for k between 1 and n, are artificial neural networks, weights and biases of those artificial neural networks may be adjusted to minimize the loss functions $L_{len}$, $L_{time}$, and $L_{data}$. More specifically, the minimization is performed after application of the loss function $L_{len}$ to the distribution representation $d_{len}$ and the length m of the private input time series Si, after application of the loss function $L_{time}$ to each distribution representation $d_k^t$ and to the timestamps $t_k$, and application of the loss function $L_{data}$ to each distribution representation $d_k^X$ and to the input data $X_k$. For instance, the loss functions $L_{len}$, $L_{time}$, and $L_{data}$, are cross entropy loss functions.

Such an iteration of the training algorithm implemented by the module 12 is repeated for each subset Sbp of private input time series of the set S of private input time series Spk.

Once all subsets Sbp have undergone an iteration of the training algorithm, the module 12 outputs the trained privacy-preserving generative model Ct.

Advantageously, the differentially private stochastic gradient descent algorithm is implemented within a federating learning process. For instance, the algorithm can be implemented via multiple independent modules, each using, for instance, its own subset of private input time series of plurality of subsets.

It has to be noted that the privacy preserving generative model can be defined in a similar manner to how the base model A is defined. Indeed, the privacy preserving generative model can be defined by the combination of the composite encoder Eu, the composite decoder Du, the overall loss function Lu, a sampler Su and a conditioning vector $c_{0u}$.

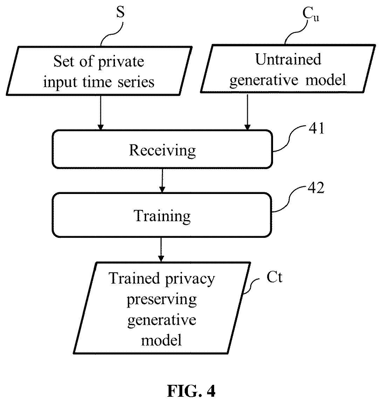

In its automatic actions, the device 1 may for example execute the following process (Figure 4):

- receiving the input data (step 41),
- training the untrained privacy-preserving generative model Cu (step 42), so as to obtain the model parameters and the trained privacy-preserving generative model Ct.

The present invention also relates to a device 2 for management of data privacy configured to generate synthetic time series, using the trained privacy-preserving generative model Ct model parametrized with the model parameters obtained from the device 1, as described above. The device 2 will be described in reference to a particular function embodiment as illustrated in Figure 2.

The device 2 is adapted to receive as input the trained privacy-preserving generative model Ct parametrized with the model parameters obtained from the device 1, and an integer number N. The integer number represents the desired number of synthetic time series to be generated by the device 2. For instance, the integer number N can be inputted by a user. The model parameters and, optionally, the integer number N are stored in one or more local or remote database(s) 10.

The device 2 comprises a module 15 for receiving the trained privacy-preserving generative model Ct parametrized with the model parameters and the integer number N, stored in one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In advantageous embodiments, the trained privacy-preserving generative model Ct parametrized with the model parameters and the model parameters have been previously generated by a system including the device 1 for training. Alternatively, the trained privacy-preserving generative model Ct parametrized with the model parameters and the model parameters are received from a communication network.

The device 2 further comprises a module 17 configured to implement the trained privacy-preserving generative model Ct parametrized with the model parameters based on the integer number N, so as to generate N synthetic time series.

The N synthetic time series may be generated by the module 17 in a sequential manner. Alternatively, the N synthetic time series may be generated by the module 17 in a parallel manner.

The generation algorithm, also called sampling process, that the module 17 of the device 2 implements, when in function, to generate one among the N synthetic time series will be now described.

Each among the N synthetic time series is sampled in an autoregressive manner, in the following manner. Let us call one of those synthetic time series Soi. It can be written as Soi = $(m_o, to_1, ... to_{m-1}, Xo1, ..., Xom_o)$. $m_o$ represents the length of the synthetic time series Soi and is an integer number. Xo1, ... Xom_o are the sampled data of the structure type of the synthetic time series Soi and can be represented by n-tuples of features.

The length $m_o$ is sampled from the decoded distribution $d_{len}$ as:

$$m_o \sim S_{len}\big(H^D(c)\big)$$

More specifically, the sampling is a coin toss over the decoded distribution $d_{len}$.

Then the first data Xo1 is sampled conditioned by the length $m_o$ and the conditioning vector c. More specifically, the length $m_o$ is encoded the encoder $E_{len}$ into an embedding vector $e_{mo}$, then $(c, e_{mo})$ is decoded by the decoder $D_{data}$ to obtain a distribution representation. The first data Xo1 is then sampled from this distribution representation.

Then, the first timestamp $to_1$ is sampled conditioned by the triplet $(c, m_o, Xo1)$, similarly as in the sampling process of the first data Xo1.

For k higher than or equal to 2, the data Xok and the timestamps tok are sampled by encoding the length $m_o$ and each already sampled data Xoi or timestamp toi, for i smaller than k:

$$(e_{len}, h_{len}) = E_{len}(m_o)$$

$$\left(e_i^{X_o}, h_i^{X_o}\right) = E_{data}(X_{oi})$$

$$\left(e_i^{t_o}, h_i^{t_o}\right) = E_{time}(t_{oi})$$

and drawing autoregressively:

$$X_k \sim S_{data}\left(H^D\left(c, H^E\big(e_{len}, e_1^{X_o}, e_1^{t_o} \ldots, e_{k-1}^{X_o}, e_{k-1}^{t_o}\big)\right)\right)$$

$$t_k \sim S_{data}\left(H^D\left(c, H^E\big(e_{len}, e_1^{X_o}, e_1^{t_o} \ldots, e_{k-1}^{X_o}\big)\right)\right)$$

The device 2 is interacting with a user interface 19, via which information can be entered and retrieved by a user. The user interface 19 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

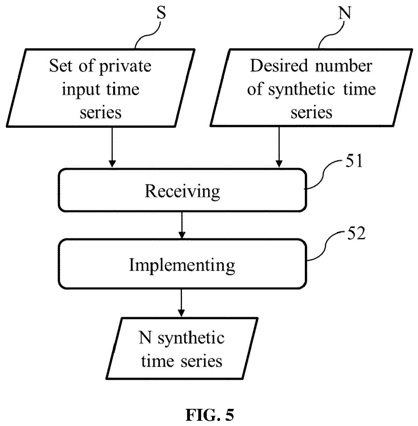

In its automatic actions, the device 2 may for example execute the following process (Figure 5):

- receiving the trained privacy-preserving generative model Ct parametrized with the model parameters, the model parameters and the integer number N (step 51),
- implementing the trained privacy-preserving generative model Ct, so as to generate the N synthetic time series (step 52).

A particular apparatus may embody the device 1 as well as the device 2 described above. It corresponds for example to a workstation, a laptop, a tablet, a smartphone, or a head-mounted display (HMD).

That apparatus is suited to generation of synthetic time series and to related ML training. It comprises the following elements, connected to each other by a bus of addresses and data that also transports a clock signal:

- a microprocessor (or CPU);
- a graphics card comprising several Graphical Processing Units (or GPUs) and a Graphical Random Access Memory (GRAM); the GPUs are quite suited to image processing, due to their highly parallel structure;
- a non-volatile memory of ROM type;
- a RAM;
- one or several I/O (Input/Output) devices such as for example a keyboard, a mouse, a trackball, a webcam; other modes for introduction of commands such as for example vocal recognition are also possible;
- a power source; and
- a radiofrequency unit.

According to a variant, the power supply is external to the apparatus.

The apparatus also comprises a display device of display screen type directly connected to the graphics card to display synthesized images calculated and composed in the graphics card. According to a variant, a display device is external to the apparatus and is connected thereto by a cable or wirelessly for transmitting the display signals. The apparatus, for example through the graphics card, comprises an interface for transmission or connection adapted to transmit a display signal to an external display means such as for example an LCD or plasma screen or a video-projector. In this respect, the RF unit can be used for wireless transmissions.

It is noted that the word "register" used hereinafter in the description of memories can designate in each of the memories mentioned, a memory zone of low capacity (some binary data) as well as a memory zone of large capacity (enabling a whole program to be stored or all or part of the data representative of data calculated or to be displayed). Also, the registers represented for the RAM and the GRAM can be arranged and constituted in any manner, and each of them does not necessarily correspond to adjacent memory locations and can be distributed otherwise (which covers notably the situation in which one register includes several smaller registers).

When switched-on, the microprocessor loads and executes the instructions of the program contained in the RAM.

As will be understood by a skilled person, the presence of the graphics card is not mandatory, and can be replaced with entire CPU processing and/or simpler visualization implementations.

In variant modes, the apparatus may include only the functionalities of the device 1, and not the learning capacities of the device 2. In addition, the device 1 and/or the device 2 may be implemented differently than a standalone software, and an apparatus or set of apparatus comprising only parts of the apparatus may be exploited through an API call or via a cloud interface.

## EXAMPLE

The present invention is further illustrated by the following examples.

Example: Implementation of the untrained privacy-preserving generative model Cu

The untrained privacy-preserving generative model Cu was implemented with PyTorch and then with Jax to get better performances. The objective was to get a data generation production algorithm. An application programming interface for synthetic data generation was created, and can be accessed through a URL. The untrained privacy-preserving generative model Cu was trained on servers along the data storage.

## Claims

1.  A device (1) for training a privacy-preserving generative model (Mt) for management of data privacy configured to generate a synthetic time series, said synthetic time series being defined by a length, a sequence of timestamps and a sequence of data of structure type, each data of structure type comprising a n-tuple of features, associated to one timestamp in the sequence of timestamps, said device (1) comprising:

    - at least one input interface configured to receive a training dataset comprising a set of private input time series (S), each private input time series ($Sp_k$) among said set of private input time series (S) comprising an input length value $m_k$, a sequence of $m_k$ input timestamps, a sequence of $m_k$ input data of structure type, each input data comprising an n-tuple of features, associated to one input timestamp among the corresponding sequence of $m_k$ input timestamps,
    - at least one processor configured to train an untrained generative model (Cu) based on said training dataset and by using a privacy-preserving training technique, so as to obtain model parameters for said trained privacy-preserving generative model (Ct) configured to output at least one synthetic time series,
    - at least one output interface configured to output said model parameters associated to said trained privacy-preserving generative model (Ct),

    wherein:

    - said generative model (Ct) comprises a combination of:

        - a first individual generative model (Clen) configured to receive as input said input length values,
        - a second individual generative model (Ctime) configured to receive as input said input timestamps,
        - a third individual generative model (Cdata) configured to receive as input said input data of the structure type,

- a first causal transformer block ($H^E$) configured to receive as input a plurality of embedding vectors obtained from said first, second and third individual generative models,
- a second causal transformer block ($H^D$) configured to receive as input a conditioning vector associated to said generative model (Ct), and a plurality of compressed representations obtained from said first causal transformer block ($H^E$),

- said trained privacy-preserving generative model (Ct) is configured to model relationships between said input length values, said input timestamps and said input data of the structure type.

2. The device (1) according to any one of claim **1** to **3**, wherein each among said first individual generative model (Clen) and said second individual generative model (Ctime) comprises an instance of a base model (A), and said third individual generative model (Cdata) comprises a combination of n instances of said base model (A), wherein said base model (A) is defined by a combination of an encoder, a decoder, a loss function, a sampler and a conditioning vector, wherein:

- said encoder is configured to encode an input element into an embedding vector and a compressed representation,
- said decoder is configured to receive said conditioning vector and said compressed representation and to output a distribution representation,
- said sampler is configured to receive said conditioning vector and said distribution representation and to output an output element,
- said loss function is defined based on said distribution representation, said input element and said output element.

3. The device (1) according to any one of the preceding claims, wherein said input timestamps are unevenly distributed.

4. The device (1) according to any one of the preceding claims, wherein n is equal to 1 and said input n-tuples of features are single real numbers.

5. The device (1) according to claim **2** or claims **3** or **4** in their dependency to claim **2**, wherein said at least one processor is configured to train said untrained generative model (Cu) using said privacy-preserving training technique by:

- encoding (S1), in a parallel manner, for a subset (Sbp) of private input time series among said set of private input time series (S), the corresponding input lengths by said encoder of said first individual generative model (Clen), the corresponding input timestamps by said encoder of said second individual generative model (Ctime) and the corresponding input data by said n encoders of said third individual generative model (Cdata) in a sequential manner, so as to obtain a corresponding subset of embedding vectors and a corresponding subset of compressed representations referred to as overall compressed representation,
- outputting (S2) a subset of distribution representations, in a parallel manner, using said decoders of said first, second and third individual generative model and based on said subset of embedding vectors and on a corresponding augmented subset of compressed representations, obtained from part of said overall compressed representation,
- minimizing (S3) an overall loss function (Lu) based the loss functions corresponding to respectively the first, the second and the third individual generative models by respectively modifying said first individual generative model (Clen), said second individual generative model (Ctime) and said third individual generative model (Cdata), said first causal transformer block ($H^E$) and said second causal transformer block ($H^D$),
- repeating steps (S1), (S2) and (S3) for another subset of private input time series among said set of private input time series (S) until step (S1) has been applied to all private input time series of said set of private input time series (S).

6. The device (1) according to claim **5**, wherein said at least one processor is configured to train said untrained generative model (Cu) by carrying out step (S3) of minimizing said overall loss function (Lu) via a differentially private stochastic gradient descent algorithm.

7. The device (1) according to any one of claim **5** or **6**, wherein said augmented set of compressed representations is obtained based on the application of said first causal transformer block ($H^E$) to said set of embedding vectors.

8. The device (1) according to claim **7**, wherein said augmented set of compressed representations is further obtained based on the application of said second causal transformer block ($H^D$) to the output of the application of said first causal transformer block ($H^E$) to said set of embedding vectors.

9. The device according to any one of the preceding claims, wherein said input data in said sequence of input data comprise one among storage management data, fleet management data, personal activity tracking data, autonomous vehicles data or medical records.

10. A computer-implemented method for training a privacy-preserving generative model (Ct) for generating a synthetic time series, said synthetic time series being defined by a length m, a sequence of timestamps and a sequence of data of the structure type, each data of the structure type comprising a n-tuple of features and corresponding to one timestamp in the sequence of timestamps, comprising:

- receiving (41), by at least one input interface, a training dataset comprising a set of private input time series (S), each among said set of private input time series (S) comprising an input length value, a sequence of input timestamps, a sequence of input data of said structure type, each input data comprising an input n-tuple of features and corresponding to one input timestamp among the corresponding sequence of input timestamps,
- training (42), by at least one processor, an untrained generative model based on said training dataset and by using a privacy-preserving training technique, so as to obtain model parameters for said trained privacy-preserving generative model configured to output at least one synthetic time series,
- outputting, via at least one output interface, said model parameters associated to said trained privacy-preserving generative model (Ct),

wherein:

- said privacy-preserving generative model (Ct) comprises a combination of:

- a first individual generative model (Clen) configured to receive as input said input length values,
- a second individual generative model (Ctime) configured to receive as input said input timestamps,
- a third individual generative model (Cdata) configured to receive as input said input data of the structure type,

- said trained privacy-preserving generative model (Ct) is configured to model relationships between said input length values, said input timestamps and said input data of the structure type,
- a first causal transformer block ($H^E$) configured to receive as input a plurality of embedding vectors obtained from said first, second and third individual generative models,
- a second causal transformer block ($H^D$) to receive as input a conditioning vector associated to said generative model (Ct), and a plurality of compressed representations obtained from said first causal transformer block ($H^E$),

11. A device (2) for management of data privacy configured to generate synthetic time series using a trained privacy-preserving generative model (Ct) parametrized with model parameters obtained by a device (1) for training according to any one of claims **1** to **9**, said synthetic time series being defined by a length, a sequence of timestamps and a sequence of data of structure type, each data of structure type comprising a n-tuple of features, associated to one timestamp in the sequence of timestamps, said device (2) comprising:

- at least one input interface configured to receive said model parameters,
- at least one processor configured to:

- generate said synthetic time series using said trained privacy-preserving generative model (Ct) parametrized with said model parameters,

- at least one output interface configured to output said synthetic time series.

12. The device according to claim **11**, wherein said at least one processor is configured to sample said synthetic temporal series in an autoregressive manner.

**FIG. 1**

**FIG. 2**

Obtaining a subset of
embedding vectors and a subset
of compressed representations — S1

Obtaining au subset of
distribution representations — S2

Minimizing loss functions — S3

**FIG. 3**

S

C_u

| Set of private input time series | Untrained generative model |

Receiving — 41

Training — 42

Trained privacy preserving generative model — Ct

**FIG. 4**

S

N

Set of private
input time
series

Desired number
of synthetic time
series

Receiving — 51

Implementing — 52

N synthetic
time series

**FIG. 5**

Europäisches
Patentamt

European
Patent Office

Office européen
des brevets

# EUROPEAN SEARCH REPORT

Application Number

EP 23 30 6775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/010686 A1 (LESH MICHAEL D [US] ET AL) 12 January 2023 (2023-01-12)<br>* paragraph [0062] – paragraph [0063] *<br>* paragraph [0056] *<br>* paragraph [0065] *<br>* paragraph [0094] *<br>----- | 1-12 | INV.<br>G06F21/62 |
| A | WANG SHUO ET AL: "PART-GAN: Privacy-Preserving Time-Series Sharing", 14 October 2020 (2020-10-14), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 578 – 593, XP047567565,<br>[retrieved on 2020-10-14]<br>* abstract *<br>----- | 1-12 | |

|  | TECHNICAL FIELDS SEARCHED (IPC) |
|---|---|
|  | G06F |

The present search report has been drawn up for all claims

| Place of search | Date of completion of the search | Examiner |
|---|---|---|
| Munich | 26 February 2024 | Medvesan, Oana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 6775**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-02-2024**

| Patent document cited in search report | Publication date | Patent family member(s) | | Publication date |
|---|---|---|---|---|
| US 2023010686  A1 | 12-01-2023 | US | 2023010686 A1 | 12-01-2023 |
|  |  | WO | 2021113728 A1 | 10-06-2021 |

For more details about this annex : see Official Journal of the European Patent Office, No. 12/82